# EUROPEAN PATENT SPECIFICATION

(11) **EP 3 776 734 B1**
(45) Date of publication and mention of the grant of the patent: **14.10.2026**
(21) Application number: 19724684.6
(22) Date of filing: 03.05.2019
(51) Int. Cl.: H01Q 3/36, H01Q 23/00, H01Q 21/29, H04B 1/04, H01Q 3/28

(54) **PHASED ARRAY ANTENNA SYSTEM**
PHASENGESTEUERTES GRUPPENANTENNENSYSTEM
SYSTÈME D'ANTENNE RÉSEAU À COMMANDE DE PHASE

(30) Priority: 14.05.2018 US 201815978909
(43) Date of publication of application: 17.02.2021
(73) Proprietor: Viasat, Inc., Carlsbad, California 92009 (US)
(72) Inventor: MIEHLE, Konrad, Carlsbad, California 92009 (US)
(74) Representative: Swindell & Pearson Limited
(86) International application number: PCT/US2019/030693
(87) International publication number: WO 2019/221936

(56) References cited:
- US-A- 4 682 176
- US-A1- 2018 069 605
- MAASKANT R ET AL: "Applying the active antenna impedance to achieve noise match in receiving array antennas", ANTENNAS AND PROPAGATION INTERNATIONAL SYMPOSIUM, 2007 IEEE, IEEE, PISCATAWAY, NJ, USA, 15 June 2007 (2007-06-15), pages 5889 - 5892, XP031170536, ISBN: 978-1-4244-0877-1

## Description

### Technical Field

The disclosure relates generally to the field of communications, and more particularly to a phased array antenna.

### Background

A phased array, or electronically scanned array, is a controlled array of antennas that creates a beam of radio waves which can be electronically steered to point in different directions without moving the antennas. In an array antenna, the radio frequency current from the transmitter is fed to the individual antennas with the correct phase relationship so that the radio waves from the separate antennas add together to increase the radiation in a desired direction while cancelling to suppress radiation in undesired directions. Directional regions of high gain, referred to as "beams," are formed by shifting the phase of the signal emitted from each radiating element to provide constructive and destructive interference to steer the beams in a desired direction. The relative amplitudes of the signals radiated by the individual antennas determine the effective radiation pattern of the array. A phased array may be used to point a fixed radiation pattern, or to scan rapidly in azimuth or elevation.

US 4,682,176 A discloses a transmit/receive module is disclosed that provides selectable impedance matching between: a power amplifier and the antenna of a phased array when the radar is transmitting, and selectable impedance matching between the antenna and a low noise amplifier when the radar is receiving. The transmit/receive module replaces the conventional fixed impedance matching system with a microprocessor, a plurality of switches and sets of pairs of electrical capacitors, resistors, and inductors. Since the antenna impedance characteristics change with changes of beam angles, the microprocessor directs the switches to configure the electrical components into any one of a number of impedance matching circuits. The microprocessor selects an optimum impedance matching circuit for the power amplifier to maintain maximum power transfer for radar transmission and another optimum impedance matching circuit for the low noise amplifier for minimum noise upon radar signal reception.

US 2018/0069605 A1 discloses a wireless transceiver using a phased array antenna panel for producing multiple beams includes receive antennas forming a receive configuration and transmit antennas forming a transmit configuration. The receive antennas form a plurality of receive beams and the transmit antennas form a plurality of transmits beams, based on phase and amplitude information provided by a master chip in the phased array antenna panel. The receive and transmit configurations can include sub-configurations, each sub-configuration forming one of the plurality of receive beams or one of the plurality of transmit beams. At least one receive antenna and at least one transmit antenna can be connected to a corresponding plurality of receive phase shifters and a corresponding plurality of transmit phase shifters respectively. The wireless transceiver can form a relay transmit beam based on a receive beam provided by a hardwire connection.

MAASKANT R ET AL: "Applying the active antenna impedance to achieve noise match in receiving array antennas" (D3) relates to demonstrating that the active instead of the passive antenna reflection coefficient is the key parameter in realizing low-noise receiver designs.

### Summary

A phased array antenna is provided according to the appended claims.

**In** accordance with another example, a method is provided for implementing a phased array antenna having a boresight direction. A scan angle within a defined range of scan angles is selected for the phased array antenna such that the selected scan angle is different from a scan angle associated with the boresight direction. An antenna port impedance associated with each of a plurality of antenna elements comprising the phased array antenna varies with the scan angle of the phased array antenna. A plurality of amplifiers are each coupled to an antenna port of one of the plurality of antenna elements. Each of the plurality of amplifiers is configured such that a maximum value for a performance characteristic of the plurality of amplifiers is achieved when an impedance at the antenna port corresponds to the selected scan angle.

In accordance with yet another example, a phased array antenna includes an array of antenna elements having a beam with a boresight direction. A first set of phase shifters is responsive to commands to adjust phases of radio frequency (RF) signals received at the array of antenna elements. A second set of phase shifters is responsive to commands to adjust phases of transmit signals for transmission by the array of antenna elements. A controller provides the commands to the first set of phase shifters and the second set of phase shifters. The provided commands are used to direct the beam within a range of scan angles relative to the boresight direction. A first set of amplifiers amplifies the signals received at the array of antenna elements. Each of the first set of amplifiers is coupled to an antenna port of the array of antenna elements and has a first performance characteristic that depends on antenna port impedance at the antenna port. The antenna impedance varies with a scan angle of the beam within the range of scan angles, with a maximum of the first performance characteristic achieved at a first value of the antenna port impedance that corresponds to a first scan angle that differs from the boresight direction. A second set of amplifiers amplifies the transmit signals to be transmitted by the array of antenna elements. Each of the second set of amplifiers is coupled to an antenna port of the array of antenna elements and has a second performance characteristic that depends on antenna port impedance at the antenna port with a maximum of the second performance characteristic achieved at a second value of the antenna port impedance that corresponds to a second scan angle that differs from each of the boresight direction and the first scan angle.

### Brief Description of the Drawings

The foregoing and other features of the present invention will become apparent to those skilled in the art to which the present invention relates upon reading the following description with reference to the accompanying drawings, in which:
FIG. 1 is a chart illustrating one example of a decline in antenna gain;
FIG. 2 is a chart illustrating the performance of one example of an amplifier tuned in accordance with the system and methods presented herein;
FIG. 3 is a chart illustrating the reduction of variation in the antenna system performance over a range of scan angles associated with the system;
FIG. 4 illustrates an example of a phased array antenna;
FIG. 5 illustrates a schematic diagram of an antenna path with an antenna element and a low noise amplifier connected by an impedance matching network;
FIG. 6 is a Smith chart illustrating one example of an impedance transformation provided via the impedance matching network of FIG. 2;
FIG. 7 is a Smith chart illustrating another example of an impedance transformation provided via the impedance matching network of FIG. 2;
FIG. 8 illustrates one implementation of a phased array antenna utilizing amplifiers configured for maximum performance at a scan angle other than the boresight direction;
FIG. 9 illustrates another implementation of a phased array antenna utilizing amplifiers configured for maximum performance at a scan angle other than the boresight direction;
FIG. 10 illustrates yet another implementation of a phased array antenna utilizing amplifiers configured for maximum performance at a scan angle other than the boresight direction; and
FIG. 11 illustrates an example of a method for implementing a phased array antenna having a boresight direction.

### Detailed Description

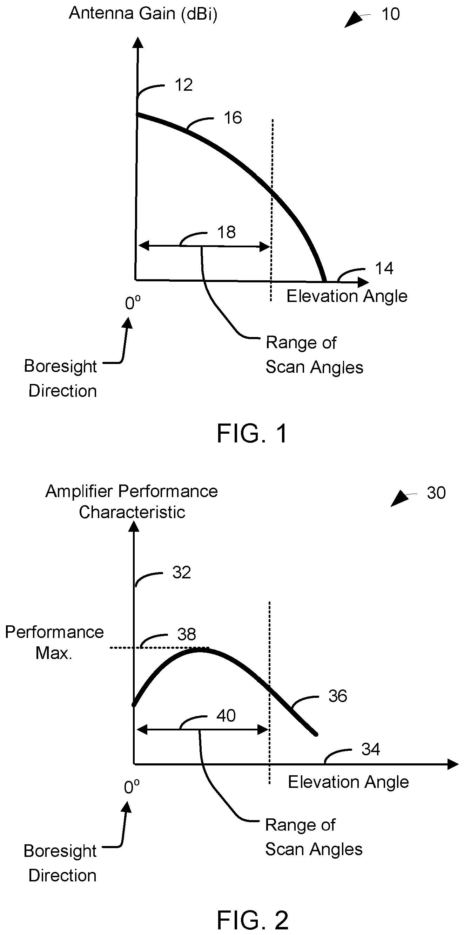

In a phased array antenna, the antenna gain of the beam is reduced as the scan angle varies from the boresight direction, where the antenna provides maximum gain. This is referred to as scan loss. The scan angle is in the coordinate system of the antenna and may vary along multiple axes (e.g., azimuth and elevation). FIG. 1 is a chart 10 illustrating one example of a reduction in antenna gain of an array of antenna elements of a phased array antenna, represented in decibels of gain relative to an isotropic radiator (dBi) on a vertical axis 12 with angle (elevation angle in this example), represented in degrees relative to a boresight direction on a horizontal axis 14. As can be seen from the plot 16, the antenna gain drops significantly over a range of scan angles 18 associated with the system as the elevation angle departs from the boresight direction.

The performance of amplifiers coupled to the array of antenna elements of the phased array antenna can also depend on antenna impedance of the antenna elements of the array, which changes with scan angle. The antenna impedance can vary from embodiment to embodiment based on various factors, and can for example be determined empirically and/or analytically. Optimizing amplifier performance for the antenna impedance at the boresight direction results in a reduction in amplifier performance at scan angles distant from the boresight direction. One approach to mitigating the amplifier sensitivity to antenna impedance is to place an isolator between them. However, in large arrays, doing so may be prohibitively expensive. In addition, RF losses of the isolator impact antenna performance.

The combination of scan loss and reduced amplifier performance at scan angles different from the boresight direction jointly cause significant degradation in the overall performance of an antenna system. Accordingly, the systems and methods described herein mitigate the impact of gain loss at higher scan angles by configuring the amplifiers such that the maximum of a performance characteristic of the amplifiers corresponds to the antenna impedance at a scan angle different than the boresight direction of maximum antenna gain. As used herein, the maximum of the performance characteristic denotes a relative maximum value over the range of scan angles that the phased array antenna is configured to operate via commands provided to phase shifters. The performance characteristic can vary from embodiment to embodiment and can depend on whether the phased array antenna is used for transmission and/or reception. As used herein, "performance characteristic" of an amplifier generally refers to any metric of the amplifier for which a higher value indicates better amplifier performance. In some embodiments, the maximum of the "performance characteristic" of the amplifier is achieved by minimizing a parameter for which a lower value indicates better performance. For example, in some embodiments described herein, the maximum of output signal-to-noise ratio (SNR) to input SNR of the amplifier is achieved by minimizing its noise figure, since noise figure is the ratio of input SNR to output SNR in dB.

FIG. 2 is a chart 30 illustrating the performance of one example of an amplifier configured in accordance with the system and methods presented herein. Specifically, the amplifier is configured such that the maximum of a performance characteristic corresponds to an antenna impedance at a scan angle different from the boresight direction. The amplifier performance is represented by a vertical axis 32 with a higher value indicating better performance, and the elevation angle is represented in degrees relative to a boresight direction on a horizontal axis 34. As can be seen from the plot 36, the amplifier performance reaches a maximum value 38 maximized at a scan angle toward the center of a range of scan angles 40 associated with the system, as opposed to the boresight direction.

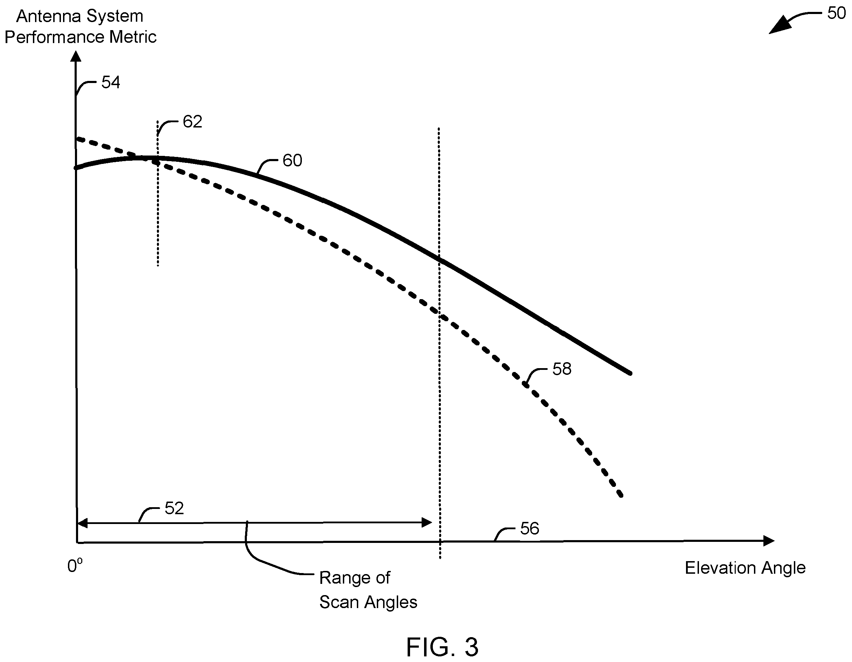

As will be described in detail herein, this reduces variation of an antenna system performance metric, for example, a gain-to-noise temperature ratio (G/T) for a received signal or the equivalent isotropically radiated power (EIRP) for a transmit signal, over the scan angle, providing improved performance at high scan angles. FIG. 3 is a chart 50 illustrating the reduction of variation in the antenna system performance metric over a range of scan angles 52 the phased array antenna is configured to operate. The antenna system performance metric is represented by a vertical axis 54 with a higher value indicating better performance, and the elevation angle is represented in degrees relative to a boresight direction on a horizontal axis 56. A first plot 58 represents the performance of a system lacking the improvements described herein. As can be seen from the plot 58, the antenna performance metric for such a system is at its maximum at the boresight direction and sharply declines as the elevation angle varies from the boresight direction.

A second plot 60 represents the performance of a system utilizing amplifiers configured as described herein such that the maximum of a performance characteristic of the amplifiers corresponds to the antenna impedance at a scan angle different than the boresight direction (0 degrees in this example) , as shown for example in FIG. 2. At boresight, the antenna gain is at a maximum, while the amplifier performance is reduced relative to its maximum performance. Accordingly, the overall performance of the system at the boresight direction is slightly degraded relative to the system represented in the first plot 58. At larger scan angles, the antenna gain is lower, but the amplifier performance is less degraded compared to the maximum performance corresponding to boresight. As a result, the antenna performance actually improves as the elevation angle departs from the boresight direction, until a point is reached for which the antenna performance is maximized. It will be appreciated that the maximum performance will generally be provided for a scan angle between the scan angle for which the antenna impedance has been tuned and the boresight direction. The antenna performance then degrades gradually as the elevation angle departs further than boresight, but significantly more gradually than the system represented by the first plot 58, providing superior performance over the majority of the range of scan angles 52. As a result, the antenna performance is collectively maximized over the range of scan angles 52.

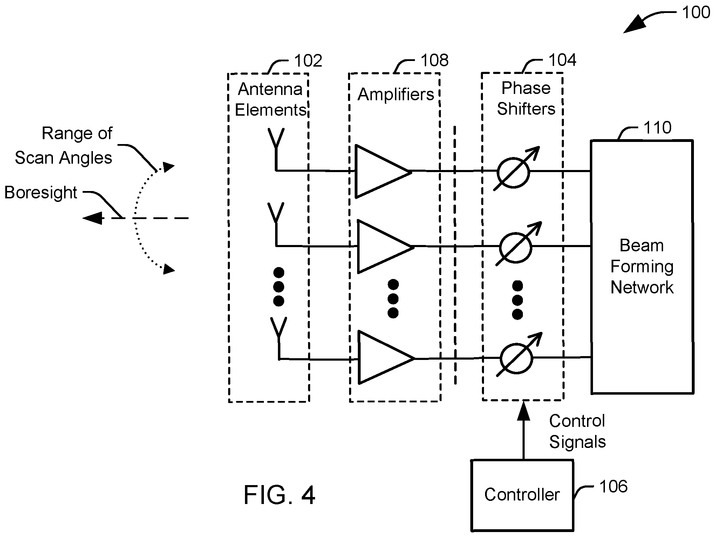

FIG. 4 illustrates an example of a phased array antenna 100. It will be appreciated that the phased array antenna 100 is a simplified representation provided for the purpose of example, and that the antenna can include additional components that are not illustrated herein. The phased array antenna comprises an array of antenna elements 102 that provide a beam with a boresight direction. A plurality of phase shifters 104 are responsive to commands to adjust phases of a plurality of radio frequency (RF) signals communicated with the array of antenna elements 102. A controller 106 provides the commands to the plurality of phase shifters 104. The controller 106 can be implemented in hardware, for example, as one or more application specific integrated circuits (ASICs), custom field programmable gate array (FPGA) chips, in software, as machine executable instructions stored on a non-transitory medium and executed by an associated processor, or as a combination of hardware and software. The provided commands are used by the plurality of phase shifters 104 to scan the beam within a range of scan angles relative to the boresight direction.

A plurality of amplifiers 108 amplify the plurality of signals. In the illustrated implementation, the amplifiers 108 amplify the received signal, and thus may be implemented as low-noise amplifiers, although it will be appreciated that the characteristics of the amplifiers can vary. Each of the plurality of amplifiers 108 is coupled to an antenna port of the array of antenna elements 102 and as a result has a performance characteristic that depends on antenna port impedance at the antenna port. The antenna impedance varies with a scan angle of the beam within the range of scan angles, and the amplifiers 108 are configured such that a maximum of the performance characteristic, such as output SNR to input SNR, is achieved at a value of the antenna port impedance that corresponds to a particular scan angle within the range of scan angles that differs from the boresight direction. As mentioned above, maximizing output SNR to input SNR of the amplifiers 108 is equivalent to minimizing noise figure of the amplifiers 108, and thus minimizing noise figure (also called "noise matched") is described hereinafter for convenience. The manner in which the amplifiers 108 are configured to be noise matched to the particular antenna port impedance value that corresponds to the particular scan angle can vary among implementations. For example, an input matching network of the amplifier may designed to provide the appropriate impedance transformation, the amplifier bias current may be selected that achieves the noise match, degeneration can be used, or any other appropriate method for selecting the impedance can be employed.

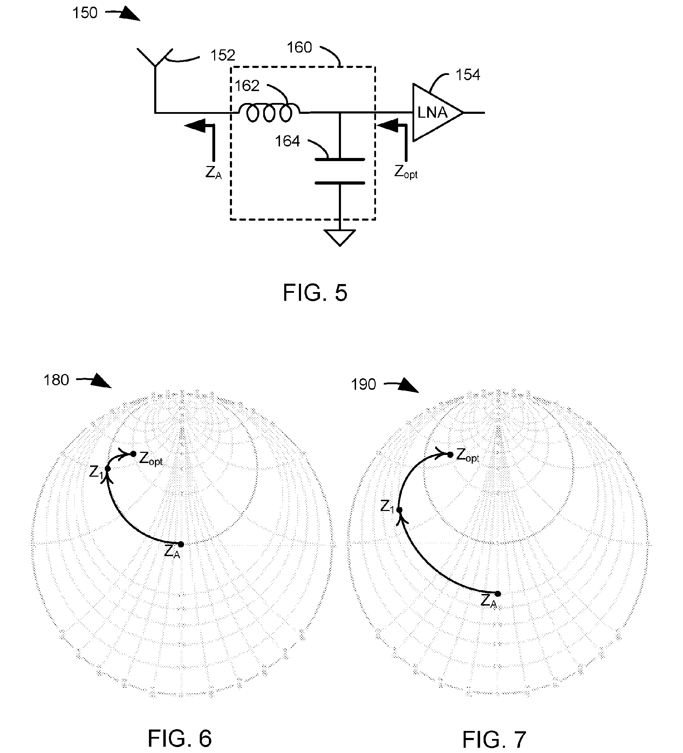

FIG. 5 illustrates a schematic diagram of an antenna path 150 with an antenna element 152 and a low noise amplifier (LNA) 154 connected by an impedance matching network 160. The impedance matching network 160 and the LNA 154 may for example collectively implement one of the amplifiers 108 of FIG. 4. In the illustrated example, the impedance matching network 160 is implemented as a series-L network, with an inductor 162 in series between the antenna element 152 and the low noise amplifier 154, and a shunt capacitor 164. Values for the inductance of the inductor 162 and the capacitance of the capacitor 164 can be selected to adjust the source impedance seen at the input of the low noise amplifier 154 to a desired value, *Zₒₚₜ,* from a known value for the impedance, *Z_{A}*, at a port of the antenna element 152.

FIG. 6 is a Smith chart 180 illustrating one example of an impedance transformation provided via the impedance matching network of FIG. 5. In the illustrated example, a scan angle of the phase array is at the boresight, and an impedance seen at the antenna port is labeled as *Z_{A}*. The first step in the transformation is placing an inductance, from the inductor 162, in series with the antenna output. This moves the impedance to the point labeled *Z₁* in the Smith chart. The value of the inductance is determined by the value of reactance needed to move from *Z_{A}* to point *Z*₁ along the unity circle. The second step is to place the shunt capacitor to arrive at the optimum source impedance *Zopt.* The value of the capacitor is determined by the susceptance needed to move from point Z₁ to *Zₒₚₜ.*

FIG. 7 is a Smith chart 190 illustrating another example of an impedance transformation provided via the impedance matching network of FIG. 5. In the illustrated example, a scan angle of the phase array is at a scan angle different than the boresight, and the impedance seen at the antenna port is accordingly different from that depicted in FIG. 3. The example of FIG. 4 can also utilize the impedance matching network illustrated in FIG. 2, but the values for the inductance of the inductor 162 and the capacitance of the capacitor 164 are changed to adjust for the change in impedance at the antenna port. In the specific example of FIG. 4, each of the impedance and the capacitance are increased from the values used in FIG. 3.

Returning to FIG. 4, during operation, the illustrated phased array antenna 100 is configured to receive a signal from a desired scan angle direction relative to the boresight direction. Each of the plurality of antenna elements 102 receives an element signal (also referred to herein as "receive signals"), which is then amplified by a corresponding one of the plurality of amplifiers 108. The amplified element signals are then provided to the plurality of phase shifters 104, which applies appropriate phase shifts to the element signals based on the desired scan angle of the beam, as indicated by control signals (also referred to herein as "commands") from the controller 106. The phase shifted element signals are then provided to a beam forming network 110, which combines the element signals to produce a beam signal corresponding to the desired scan angle. In the illustrated embodiment, the desired scan angle is achieved by adjusting the phase of the element signals via the phase shifters 104. In some embodiments, the phased array antenna 100 further includes amplitude adjustment circuits (e.g., variable gain amplifiers) to further adjust the amplitude of the element signals in response to the control signals.

One parameter determining the noise figure of a low noise amplifier is the source impedance, *Z_{source},* presented at its input. Ideally, *Z_{source}* is a fixed value that provides the lowest noise figure (referred to as noise matched). However, in a phased array antenna, the antenna port impedance, *Z_{A}*, referred to as the active or scan impedance, changes with scan angle, and thus the source impedance is not constant.

The noise optimization employed herein can be better understood from Eq (1): $F = {F}_{min} + \frac{{R}_{N}}{{G}_{S}} {\left|{Y}_{S}-{Y}_{opt}\right|}^{2}$ Eq.1
where *Y_{S} = G_{S} + jB_{S}* is the source admittance presented to the active circuitry of the amplifier, *Yₒₚₜ* is the optimum source admittance that results in minimum noise figure, *Fₘᵢₙ* is a minimum noise figure of the active circuitry of amplifier, attained when *Y_{S} = Yₒₚₜ, R_{N}* is the equivalent noise resistance of the active circuitry of amplifier, *G_{S}* is the real part of source admittance, and *F* is the noise factor.

From Eq (1), it can be seen that if the actual source admittance, *Y_{S},* presented to the amplifier is equal to the optimum source impedance, *Yₒₚₜ,* the second term in Eq (1) becomes zero. In this case, the noise figure will assume the minimum value achievable. Accordingly, to improve the overall performance of the antenna system 100 at higher scan angles at the expense of slightly lower performance at boresight, the low noise amplifiers are configured to be noise matched to a particular value of the antenna port impedance, *Z_{A}*, that corresponds to a particular scan angle that differs from the boresight direction. Where the antenna system is used to receive a signal having a frequency range, the particular value of the antenna port impedance *Z_{A}* may be selected for one of the frequencies in the frequency range, including a maximum frequency, a minimum frequency, a center frequency, or other representative frequency within the range.

In some implementations, the particular scan angle is selected based on the resulting values of the antenna system performance metric at one or more scan angles. Using the example of a gain-to-noise-temperature ratio for the performance metric, it will be appreciated that a maximum gain of the phased array antenna 100, *G*(*θ*), is a function of the scan angle, *θ*, with the maximum gain being provided at boresight. Similarly, the noise factor, and thus the noise temperature, is a function of the mismatch of the source admittance presented to the amplifier to an optimal source admittance for the amplifier, as discussed in Eq. 1. The antenna port impedance, and thus the admittance, varies with the scan angle, *θ*, and thus the noise factor, *F*, is a function of each of the scan angle and a selected optimal source admittance for the amplifier, which we represent here as a specific scan angle, *θₒₚₜ,* for which the optimal source impedance matches the admittance at the antenna port.

In one example, the particular scan angle may be selected to provide a predetermined minimum value of the antenna system performance metric across a largest possible range of scan angles. It will be appreciated that the impedance mismatch at angles far from the boresight direction will decrease as the particular scan angle is varied away from the boresight direction. Accordingly, in one implementation, the particular scan angle can be varied across a range of scan angles away from the boresight direction until the antenna system performance metric drops below the predetermined minimum for at least one scan angle within the range, with the largest deviation of the particular scan angle from the boresight direction that maintains the minimum performance across the predetermined range selected.

In another implementation, the value for the particular scan angle is selected to maximize a minimum value for the gain-to-noise-temperature ratio across a predetermined range of scan angles. In this instance, the optimization problem is to select a source admittance for the amplifier that maximizes the value: ${min}_{i} \left(\frac{G \left({θ}_{i}\right)}{{T}_{0} \left[F\left({θ}_{i}, {θ}_{opt}\right)-1\right]}\right)$ Eq.2
where *θᵢ* varies within a defined range of scan angles, [*θ₁, θ_{N}*]*,* and *T₀* is 273 K.

It will be appreciated that the change in the gain with the scan angle, and the change in the noise angle with the scan angle can be modeled based on a design of the phased array antenna 100, and thus an optimal value for *θₒₚₜ* can be determined via an appropriate optimization algorithm, such as a gradient search. Alternatively, a "brute force" approach can be employed, in which each of a plurality of preselected values for the particular scan angle, *θₒₚₜ,* are evaluated and a maximum value is selected.

In one implementation consistent with this example, the scan angle is selected to maintain at least a minimum value for the antenna performance metric at a maximum scan angle of the operating range of scan angles, such that the defined range of scan angles encompasses the entire operating range of the phased antenna array 100. Alternatively, the particular scan angle may be selected to provide the predetermined minimum value of the antenna system performance metric across or a selected proper subset of scan angles within the range of scan angles. It will be appreciated that the selected subset of scan angles can exclude the boresight direction.

In another implementation, the particular scan angle is selected based on the maximum scan angle, such that the selected scan angle is at a predetermined location, between the boresight direction and the maximum scan angle, such as halfway between the boresight direction and the maximum scan angle. For example, if the maximum scan angle is sixty degrees elevation from the boresight direction, the amplifiers 108 may be noise matched to the antenna port impedance corresponding to thirty degrees elevation.

In a further example, the particular scan angle is selected such that a total sum of the performance metric across all scan angles within the range of scan angles or a proper subset of the range of scan angles is maximized. Again using the gain-to-noise-temperature ratio, the optimization problem can be expressed as selecting the particular scan angle, *θₒₚₜ,* that maximizes the value over the defined range of scan angles, [*θ₁, θ_{N}*]: ${\sum }_{i = 1}^{N} \left(\frac{G \left({θ}_{i}\right)}{{T}_{0} \left[F\left({θ}_{i}, {θ}_{opt}\right)-1\right]}\right)$ Eq.3

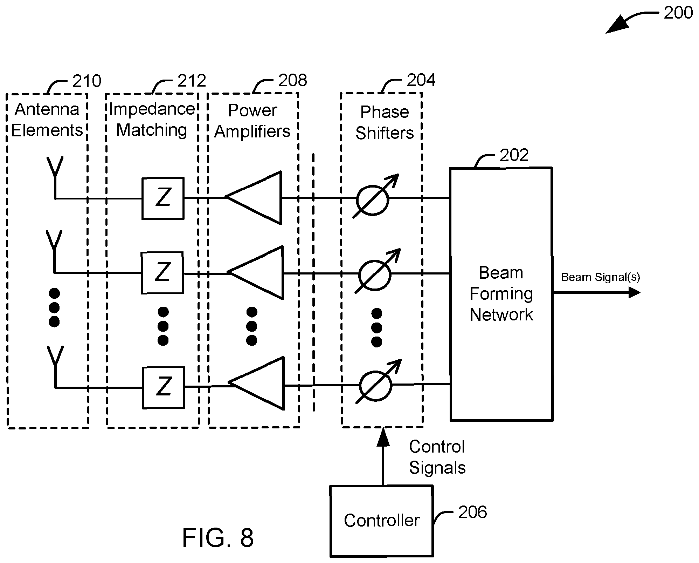

FIG. 8 illustrates one implementation of a phased array antenna 200 utilizing amplifiers configured for maximum performance at a scan angle other than the boresight direction. In the illustrated implementation, the phase array antenna 200 is configured to transmit a signal in a desired scan angle direction relative to a boresight direction. A beamforming network 202 receives a beam signal that is intended to be transmitted in the desired scan angle direction. The beam forming network 202 divides the beam signal into element signals (also referred to herein as "transmit signals"), which are provided to a plurality of phase shifters 204. Each of the plurality of phase shifters 204 are responsive to control signals from a controller 206 to provide appropriate phase shifts to the signals based on a desired scan angle of the beam. The phase shifted signals are then amplified by a plurality of power amplifiers 208 and provided to the antenna elements 210 for transmission to produce a transmit beam in the desired scan angle direction. In the illustrated embodiment, the desired scan angle is achieved by adjusting the phase of the element signals via the phase shifters 204. In some embodiments, the phased array antenna 100 further includes amplitude adjustment circuits (e.g., variable gain amplifiers) to further adjust the amplitude of the element signals in response to the control signals.

Power amplifiers are designed for a given output power level. One parameter that determines the output power level is the load impedance, *Z_{Load},* presented at its output. Ideally, Z_{Load} is a fixed value that permits the power amplifier to produce the given output power level. However, in a phased array antenna, the antenna port impedance, *Z_{A}*, changes with scan angle, and thus the load impedance *Z_{Load},* is not constant. To improve an antenna performance metric, such as an equivalent radiated power or an equivalent isotropically radiated power of the antenna, at higher scan angles at the expense of slightly lower performance at boresight, the power amplifiers 208 are configured to provide maximum output power at a particular value of the antenna port impedance, *Z_{A}*, that corresponds to a particular scan angle that differs from the boresight direction. In the illustrated implementation, a plurality of impedance matching networks 212 are implemented between the antennas 210 and the amplifiers 208. The impedance matching networks 212 adjust the antenna impedance to a desired load impedance. In one implementation, comprising an integrated circuit design, impedance matching networks can be designed using lumped components such as inductors and capacitor.

Using the example of an effective isotropic radiated power (EIRP) for the performance metric, it will be appreciated that a maximum power of the phased array antenna 100, *G(θ)*, is a function of the scan angle, *θ*, with the maximum gain being provided at boresight. Some power can be lost due to a mismatch of the impedance at the power amplifier to an impedance at the antenna port. The antenna port impedance, and thus the admittance, varies with the scan angle, *θ*, and thus the reflected power, R, is a function of each of the scan angle and a selected optimal source impedance for the amplifier, which we represent here as a specific scan angle, *θₒₚₜ,* for which the optimal source impedance matches the admittance at the antenna port.

In one example, the particular scan angle may be selected to provide a predetermined minimum value of the antenna system performance metric across a largest possible range of scan angles. It will be appreciated that the impedance mismatch at angles far from the boresight angle will decrease as the particular scan angle is varied away from the boresight direction. Accordingly, in one implementation, the particular scan angle can be varied across a range of scan angles away from the boresight direction until the antenna system performance metric drops below the predetermined minimum for at least one scan angle within the range, with the largest deviation of the particular scan angle from the boresight direction that maintains the minimum performance across the predetermined range selected.

In another implementation, the value for the particular scan angle is selected to maximize a minimum value for ERIP across a predetermined range of scan angles. In this instance, the optimization problem is to select a source admittance for the amplifier that maximizes the value: ${min}_{i} \left(\frac{I \left({θ}_{i}\right) - R \left({θ}_{i}, {θ}_{opt}\right)}{{I}_{iso}}\right) {P}_{in}$ Eq.4
where *θᵢ* varies within a defined range of scan angles, [*θ₁, θ_{N}*] *, Pᵢₙ* is an power input to the system, and *Iᵢₛₒ* is the power radiated in the direction of the scan angle by a hypothetical lossless isotropic antenna.

It will be appreciated that the change in the gain with the scan angle, and the change in the reflected power with the scan angle can be modeled based on a design of the phased array antenna 100, and thus an optimal value for *θₒₚₜ* can be determined via an appropriate optimization algorithm, such as a gradient search. Alternatively, a "brute force" approach can be employed, in which each of a plurality of preselected values for the particular scan angle, *θₒₚₜ,* are evaluated and a maximum value is selected.

In one implementation consistent with this example, the scan angle is selected to maintain at least a minimum value for the EIRP at a maximum scan angle of the operating range of scan angles, such that the defined range of scan angles encompasses the entire operating range of the phased antenna array 100. Alternatively, the particular scan angle may be selected to provide the predetermined minimum value of the EIRP or other performance metric across a selected proper subset of scan angles within the range of scan angles. It will be appreciated that the selected subset of scan angles can exclude the boresight angle.

In another implementation, the particular scan angle is selected based on the maximum scan angle, such that the selected scan angle is at a predetermined location, between the boresight direction and the maximum scan angle, such as halfway between the boresight direction and the maximum scan angle. For example, if the maximum scan angle is sixty degrees elevation from the boresight direction, the power amplifiers 208 may be noise matched to the antenna port impedance corresponding to thirty degrees elevation.

In a further example, the particular scan angle is selected such that a total sum of the EIRP or other performance metric across all scan angles within the range of scan angles or a proper subset of the range of scan angles is maximized. The optimization problem can be expressed as selecting the particular scan angle, *θₒₚₜ,* that maximizes the value over the defined range of scan angles, [*θ₁, θ_{N}*]: ${\sum }_{i = 1}^{N} \left(\frac{I \left(θ\right) - R \left(θ, {θ}_{opt}\right)}{{I}_{iso}}\right) {P}_{in}$ Eq.5

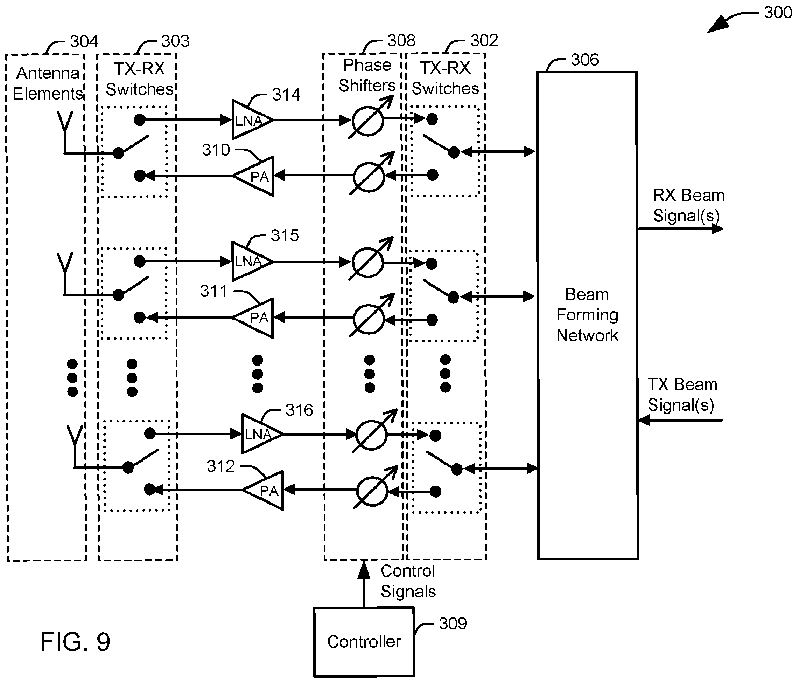

FIG. 9 illustrates another implementation of a phased array antenna 300 utilizing amplifiers configured for maximum performance at a scan angle other than the boresight direction. In the illustrated implementation, the phase array antenna 300 is configured in a half-duplex arrangement to transmit and receive radio frequency signals in a desired scan angle direction relative to a boresight direction. In the half-duplex arrangement, two sets of transmit/receive (Tx-Rx) switches 302 and 303 are used to switch the antenna 300 between a transmission path and a receive path for each of a plurality of antenna elements 304. During transmission, a beamforming network 306 receives a beam signal that is intended to be transmitted in the desired scan angle direction. The beam forming network 306 divides the beam signal into element signals, which are provided to a plurality of phase shifters 308. Each of the plurality of phase shifters 308 are responsive to control signals from a controller 309 to provide appropriate phase shifts to the signals based on a desired scan angle of the beam. The phase shifted signals are then amplified by a plurality of power amplifiers (PAs) 310-312 and provided to the antenna elements 304 for transmission to produce a transmit beam in the desired scan angle direction.

During reception, each of the plurality of antenna elements 304 receives an element signal, which is then amplified by a corresponding one of a plurality of low noise amplifiers (LNAs) 314-316. The amplified signals are then provided to the plurality of phase shifters 308, which apply appropriate phase shifts to the signals based on the desired scan angle of the beam, as provided by the controller 309. The phase shifted signals are then provided to the beam forming network 306, which combines the signals to produce a beam signal corresponding to the desired scan angle.

Due to reciprocity, the antenna port impedance, *Z_{A}*, of the antenna elements versus scan angle is the same for transmission and reception, assuming the same frequencies are used. However, the performance variation of the low noise amplifiers with changes in the antenna port impedance can be different than the performance variation of the power amplifiers for varying antenna port impedance. These differences in amplifier performance variation may result in different values of the antenna port impedance, and thus different particular scan angles, being selected for the low noise amplifiers 314-316 and power amplifiers 310-312, respectively. The receive performance metric for reception, such as a gain-to-noise temperature ratio, may depend on the performance variation of the low noise amplifiers 314-316 differently than the way in which the performance metric for transmission, such as an equivalent isotropically radiated power, depends on the performance variation of the power amplifiers 310-312. Accordingly, in some implementations, the low noise amplifiers are configured to be noise matched at a first value of the antenna port impedance that corresponds to a first scan angle, while the power amplifiers are configured for maximum output power at the second value of the antenna port impedance that corresponds to a second scan angle different than the first scan angle.

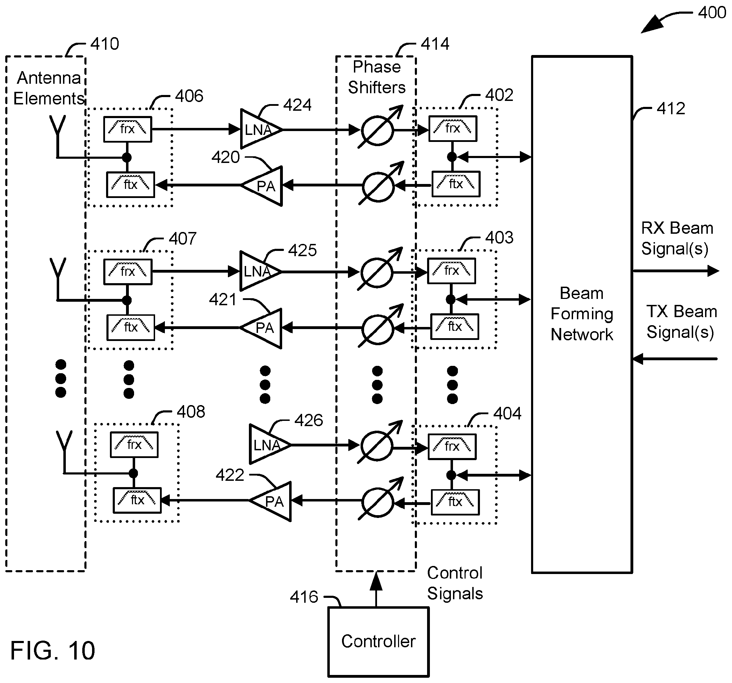

FIG. 10 illustrates yet another implementation of a phased array antenna 400 utilizing amplifiers configured for maximum performance at a scan angle other than the boresight direction. In the illustrated implementation, the phase array antenna 400 is configured in a frequency division duplex arrangement to transmit and receive radio frequency signals in a desired scan angle direction relative to a boresight direction. In the frequency division duplex arrangement, two sets of diplexers 402-404 and 406-408 that permit a plurality of antenna elements 410 to be used for both transmit and receive. During transmission, a beamforming network 412 receives a beam signal that is intended to be transmitted in the desired scan angle direction. The beam forming network 412 divides the beam signal into element signals, which are provided to a plurality of phase shifters 414. Each of the plurality of phase shifters 414 are responsive to control signals from a controller 416 to provide appropriate phase shifts to the signals based on a desired scan angle of the beam. The phase shifted signals are then amplified by a plurality of power amplifiers (PAs) 420-422 and provided to the antenna elements 410 for transmission to produce a transmit beam in the desired scan angle direction.

During reception, each of the plurality of antenna elements 410 receives an element signal, which is then amplified by a corresponding one of a plurality of low noise amplifiers (LNAs) 424-426. The amplified signals are then provided to the plurality of phase shifters 414, which apply appropriate phase shifts to the signals based on the desired scan angle of the beam, as provided by the controller 416. The phase shifted signals are then provided to the beam forming network 412, which combines the signals to produce a beam signal corresponding to the desired scan angle.

Since different frequencies are used for transmission and reception, the change in the antenna port impedance of the antenna elements across scan angles can be different for transmission and reception. As a result, different values of the antenna port impedance may be selected for the low-noise amplifiers and power amplifiers respectively. Accordingly, in some implementations, the low noise amplifiers are configured to be noise matched at a first value of the antenna port impedance that corresponds to a first scan angle, while the power amplifiers are configured for maximum output power at the second value of the antenna port impedance that corresponds to a second scan angle different than the first scan angle.

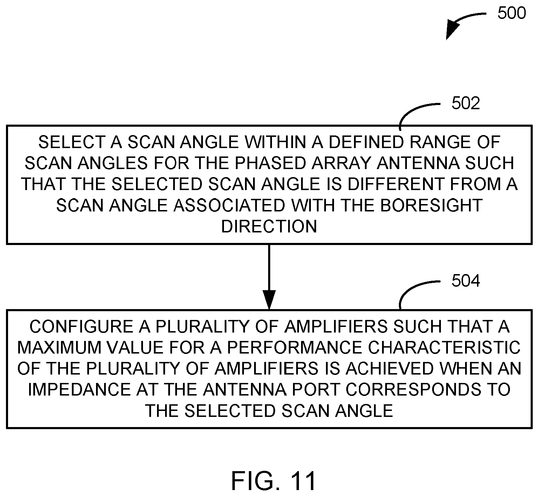

In view of the foregoing structural and functional features described above, an example method will be better appreciated with reference to FIG. 11. While, for purposes of simplicity of explanation, the example method of FIG. 11 is shown and described as executing serially, it is to be understood and appreciated that the present examples are not limited by the illustrated order, as some actions could in other examples occur in different orders, multiple times and/or concurrently from that shown and described herein. Moreover, it is not necessary that all described actions be performed to implement a method.

FIG. 11 illustrates an example of a method 500 for implementing a phased array antenna having a boresight direction. At 502, a scan angle within a defined range of scan angles for the phased array antenna is selected such that the selected scan angle is different from a scan angle associated with the boresight direction. At 504, a plurality of amplifiers, each coupled to an antenna port of one of the plurality of antenna elements, are configured such that a maximum value for a performance characteristic of the plurality of amplifiers is achieved when an impedance at the antenna port corresponds to the selected scan angle. In one implementation, the amplifiers are configured by providing an impedance matching network for each of the plurality of amplifiers to adjust the impedance at the antenna port to which the amplifier is connected.

It will be appreciated that the scan angle can be selected to maximize a performance metric for the phased array antenna across a range of scan angles, which can include all scan angles in an operating range of the phased array antenna or a proper subset of the operating range. Appropriate performance metrics for the phased array antenna can include, for example, a gain-to-noise temperature ratio, an effective radiated power, and an effective isotropic radiated power. In one implementation, the scan angle is selected to provide an extrema for a function of a performance metric for the phased array antenna across all scan angles within all or a subset of the defined range. For example, the scan angle can be selected to maximize a total sum of the performance metric across all scan angles within all or a subset of the defined range. Alternatively, the scan angle can be selected to maximize a minimum value for the performance metric across all scan angles within all or a subset of the defined range.

The desired properties for an antenna array may differ for reception and transmission for the antenna. As a result, in one implementation, each of a first scan angle that is different from the scan angle associated with the boresight direction and a second scan angle that is different from both the scan angle associated with the boresight direction and the first scan angle can be selected. A first set of amplifiers that amplify receive signals, such as low noise amplifiers, can be configured such that a maximum value for a first performance characteristic is achieved when the impedance at the antenna port corresponds to the first scan angle, and a second set of amplifiers that amplify transmit signals, such as power amplifiers, can be configured such that a maximum value for a second performance characteristic is achieved when the impedance at the antenna port corresponds to the second scan angle. Accordingly, the antenna array can be optimized for both its transmission and reception functions.

What have been described above are examples. It is, of course, not possible to describe every conceivable combination of components or methodologies, but one of ordinary skill in the art will recognize that many further combinations and permutations are possible. Accordingly, the disclosure is intended to embrace all such alterations, modifications, and variations that fall within the scope of this application as defined by the appended claims. As used herein, the term "includes" means includes but not limited to, the term "including" means including but not limited to. The term "based on" means based at least in part on. Additionally, where the disclosure or claims recite "a," "an," "a first," or "another" element, or the equivalent thereof, it should be interpreted to include one or more than one such element, neither requiring nor excluding two or more such elements.

## Claims

1. A phased array antenna (100; 200; 300; 400) comprising:
an array of antenna elements (102; 152; 210; 304; 410) having a beam with a boresight direction;
a plurality of phase shifters (104) responsive to commands to adjust phases of a plurality of signals communicated with the array of antenna elements;
a controller (106; 206; 309; 416) to provide the commands to the plurality of phase shifters, wherein the provided commands are used by the plurality of phase shifters to direct the beam within a range of scan angles relative to the boresight direction;
a first plurality of amplifiers (108; 154; 208; 310-316; 420-426) each configured to amplify a signal of the plurality of signals received at an associated antenna element, wherein each of the first plurality of amplifiers is coupled to an antenna port of the array of antenna elements, via an impedance matching network (160), and has a first performance characteristic that depends on antenna port impedance at the antenna port, wherein the antenna impedance varies with a scan angle of the beam within the range of scan angles, wherein a maximum of the first performance characteristic is achieved at a value of the antenna port impedance that corresponds to a first particular scan angle within the range of scan angles that differs from the boresight direction, and wherein each of the first plurality of amplifiers is noise matched to the value of the antenna port impedance that corresponds to the first particular scan angle, by the impedance matching network, and remains noise matched to the value of the antenna port impedance that corresponds to the first particular scan angle whenever signals are received using the array of antenna elements at any scan angle within the range of scan angles; and
a second plurality of amplifiers (314-316; 424-426), each configured to amplify a signal of the plurality of signals for transmission at an associated antenna element such that a maximum value for a second performance metric of the phased array antenna is achieved when the antenna port impedance corresponds to a second particular scan angle that is different from the boresight direction and the first particular scan angle.

2. The phased array antenna of claim 1, wherein the first particular scan angle within the range of scan angles is selected to maximize a performance metric of the phased array antenna.

3. The phased array antenna of claim 2, wherein the performance metric comprises a gain-to-noise temperature ratio for the phased array antenna.

4. The phased array antenna of claim 3, wherein the second performance metric comprises one of an effective radiated power for the phased array antenna and an effective isotropic radiated power for the phased array antenna.

5. The phased array antenna of claim 4, wherein the second plurality of amplifiers are each configured to amplify a signal of the plurality of signals for transmission at an associated antenna element, the performance metric comprising one of an effective radiated power for the phased array antenna and an effective isotropic radiated power for the phased array antenna.

6. The phased array antenna of claim 2, wherein the particular scan angle is selected such that a minimum value for the performance metric across all scan angles within the range of scan angles is maximized.

7. The phased array antenna of claim 2, wherein the particular scan angle is selected such that a total sum of the performance metric across all scan angles within the range of scan angles is maximized.

8. The phased array antenna of claim 2, wherein the range of scan angles defines a maximum scan angle, and the particular scan angle is selected to be halfway between the boresight direction and the maximum scan angle.

9. The phased array antenna of claim 2, the particular scan angle is selected to maximize a function of the performance metric across all scan angles within a proper subset of the range of scan angles, wherein, optionally, the proper subset of the range of scan angles does not include the boresight direction.

10. A method for implementing a phased array antenna (100; 200; 300; 400) having a boresight direction, the method comprising:
selecting a scan angle within a defined range of scan angles for the phased array antenna such that the selected scan angle is different from a scan angle associated with the boresight direction, an antenna port impedance associated with each of a plurality of antenna elements (102; 152; 210; 304; 410) comprising the phased array antenna varying with the scan angle of the phased array antenna, wherein selecting a scan angle within the defined range of scan angles for the phased array antennal comprises selecting a first scan angle that is different from the scan angle associated with the boresight direction and a second scan angle that is different from each of the scan angle associated with the boresight direction and the first scan angle;
configuring a first plurality of amplifiers (108; 154; 208; 310-316; 420-426), each coupled to an antenna port of one of the plurality of antenna elements via an impedance matching network (160), that amplify receive signals such that a maximum value for a first performance characteristic of the phased array antenna is achieved when an impedance at the antenna port corresponds to the first scan angle, and such that each of the first plurality of amplifiers is noise matched to the impedance at the antenna port that corresponds to the first scan angle, by the impedance matching network, and remains noise matched to the impedance at the antenna port that corresponds to the first scan angle whenever signals are received using the plurality of antenna elements at any scan angle within the defined range of scan angles; and
configuring a second set of amplifiers, each coupled to an antenna port of one of the plurality of antenna elements, that amplify transmit signals such that a maximum value for a second performance characteristic of the phased array antenna is achieved when the impedance at the antenna port corresponds to the second scan angle.

11. The method of claim 10, wherein selecting a scan angle within a defined range of scan angles for the phased array antenna comprises selecting the scan angle to provide an extrema for a function of a performance metric for the phased array antenna across all scan angles within a subset of the defined range.

12. The method of claim 11, wherein the first performance metric is a gain-to-noise temperature ratio for the phased array antenna.

13. The method of any one of claims 11 through 12, wherein selecting the scan angle to provide the extrema for the function of the performance metric across all scan angles within the subset of the defined range comprises selecting the scan angle to maximize a total sum of the performance metric across all scan angles within the subset of the defined range.

14. The method of any one of claims 11 through 13, wherein selecting the scan angle to provide the extrema for the function of the performance metric across all scan angles within the subset of the defined range comprises selecting the scan angle to maximize a minimum value for the performance metric across all scan angles within the subset of the defined range.

15. The method of any one of claims 11 through 14, wherein the subset of the defined range is a proper subset of the defined range.

## Patentansprüche

1. Phasengesteuerte Gruppenantenne (100; 200; 300; 400), umfassend:
eine Gruppe von Antennenelementen (102; 152; 210; 304; 410), die einen Strahl mit einer Hauptstrahlrichtung aufweist;
eine Vielzahl von Phasenschiebern (104), die auf Befehle reagieren, um Phasen einer Vielzahl von Signalen anzupassen, die an die Gruppe von Antennenelementen übertragen werden;
eine Steuerung (106; 206; 309; 416), um die Befehle an die Vielzahl von Phasenschiebern bereitzustellen, wobei die bereitgestellten Befehle von der Vielzahl von Phasenschiebern verwendet werden, um den Strahl innerhalb eines Bereichs von Abtastwinkeln in Bezug auf die Hauptstrahlrichtung auszurichten;
eine erste Vielzahl von Verstärkern (108; 154; 208; 310-316; 420-426), die jeweils konfiguriert sind, um ein Signal der Vielzahl von Signalen zu verstärken, die an einem assoziierten Antennenelement empfangen werden, wobei jeder der ersten Vielzahl von Verstärkern über ein Impedanzanpassungsnetz (160) mit einem Antennenanschluss der Gruppe von Antennenelementen gekoppelt ist und eine erste Leistungskennlinie aufweist, die von einer Antennenanschlussimpedanz an dem Antennenanschluss abhängt, wobei die Antennenimpedanz abhängig von einem Abtastwinkel des Strahls innerhalb des Bereichs von Abtastwinkeln ändert, wobei ein Maximum der ersten Leistungskennlinie bei einem Wert der Antennenanschlussimpedanz erreicht wird, der einem ersten jeweiligen Abtastwinkel innerhalb des Bereichs von Abtastwinkeln entspricht, der von der Hauptstrahlrichtung abweicht, und wobei jeder der ersten Vielzahl von Verstärkern hinsichtlich Rauschen durch das Impedanzanpassungsnetz an den Wert der Antennenanschlussimpedanz angeglichen wird, der dem ersten bestimmten Abtastwinkel entspricht, und an den Wert der Antennenanschlussimpedanz angeglichen bleibt, der dem ersten jeweiligen Abtastwinkel entspricht, wann immer Signale unter Verwendung der Gruppe von Antennenelementen bei einem beliebigen Abtastwinkel innerhalb des Bereichs von Abtastwinkeln empfangen werden; und
eine zweite Vielzahl von Verstärkern (314-316; 424-426), die jeweils konfiguriert sind, um ein Signal der Vielzahl von Signalen zur Übertragung an einem assoziierten Antennenelement zu verstärken, sodass ein Maximalwert für eine zweite Leistungskennzahl der phasengesteuerten Gruppenantenne erreicht wird, wenn die Antennenanschlussimpedanz einem zweiten jeweiligen Abtastwinkel entspricht, der sich von der Hauptstrahlrichtung und dem ersten jeweiligen Abtastwinkel unterscheidet.

2. Phasengesteuerte Gruppenantenne nach Anspruch 1, wobei der erste bestimmte Abtastwinkel innerhalb des Bereichs von Abtastwinkeln ausgewählt ist, um eine Leistungskennzahl der phasengesteuerten Gruppenantenne zu maximieren.

3. Phasengesteuerte Gruppenantenne nach Anspruch 2, wobei die Leistungskennzahl ein Verstärkung/Rauschen-Temperaturverhältnis für die phasengesteuerte Gruppenantenne umfasst.

4. Phasengesteuerte Gruppenantenne nach Anspruch 3, wobei die zweite Leistungskennzahl eines von einer effektiven Strahlungsleistung für die phasengesteuerte Gruppenantenne und einer effektiven isotropen Strahlungsleistung für die phasengesteuerte Gruppenantenne umfasst.

5. Phasengesteuerte Gruppenantenne nach Anspruch 4, wobei die zweite Vielzahl von Verstärkern jeweils konfiguriert ist, um ein Signal der Vielzahl von Signalen zur Übertragung an einem assoziierten Antennenelement zu verstärken, die Leistungskennzahl umfassend eines von einer effektiven Strahlungsleistung für die phasengesteuerte Gruppenantenne und einer effektiven isotropen Strahlungsleistung für die phasengesteuerte Gruppenantenne.

6. Phasengesteuerte Gruppenantenne nach Anspruch 2, wobei der jeweilige Abtastwinkel ausgewählt wird, sodass ein Minimalwert für die Leistungskennzahl über alle Abtastwinkel innerhalb des Bereichs von Abtastwinkeln maximiert ist.

7. Phasengesteuerte Gruppenantenne nach Anspruch 2, wobei der jeweilige Abtastwinkel ausgewählt wird, sodass eine Gesamtsumme der Leistungskennzahl über alle Abtastwinkel innerhalb des Bereichs von Abtastwinkeln maximiert ist.

8. Phasengesteuerte Gruppenantenne nach Anspruch 2, wobei der Bereich von Abtastwinkeln einen maximalen Abtastwinkel definiert und der jeweilige Abtastwinkel ausgewählt wird, um auf halbem Weg zwischen der Hauptstrahlrichtung und dem maximalen Abtastwinkel zu sein.

9. Phasengesteuerte Gruppenantenne nach Anspruch 2, der jeweilige Abtastwinkel ausgewählt wird, sodass eine Funktion der Leistungskennzahl über alle Abtastwinkel innerhalb einer echten Teilmenge des Bereichs von Abtastwinkeln maximiert ist, wobei optional die echte Teilmenge des Bereichs von Abtastwinkeln die Hauptstrahlrichtung nicht beinhaltet.

10. Verfahren zum Implementieren einer phasengesteuerten Gruppenantenne (100; 200; 300; 400), die eine Hauptstrahlrichtung aufweist, das Verfahren umfassend:
Auswählen eines Abtastwinkels innerhalb eines definierten Bereichs von Abtastwinkeln für die phasengesteuerte Gruppenantenne, sodass sich der ausgewählte Abtastwinkel von einem Abtastwinkel unterscheidet, der mit der Hauptstrahlrichtung assoziiert ist, eine Antennenanschlussimpedanz, die mit jedem einer Vielzahl von Antennenelementen (102; 152; 210; 304; 410), umfassend die phasengesteuerte Gruppenantenne, assoziiert ist, die sich mit dem Abtastwinkel der phasengesteuerten Gruppenantenne ändert, wobei ein Auswählen eines Abtastwinkels innerhalb des definierten Bereichs von Abtastwinkeln für die phasengesteuerte Gruppenantenne ein Auswählen eines ersten Abtastwinkels umfasst, der sich von dem Abtastwinkel unterscheidet, der mit der Hauptstrahlrichtung assoziiert ist, und eines zweiten Abtastwinkels, der sich von jedem von dem Abtastwinkel, der mit der Hauptstrahlrichtung assoziiert ist, und dem ersten Abtastwinkel unterscheidet;
Konfigurieren einer ersten Vielzahl von Verstärkern (108; 154; 208; 310-316; 420-426), die jeweils über ein Impedanzanpassungsnetz (160) mit einem Antennenanschluss eines der Vielzahl von Antennenelementen gekoppelt sind, die Empfangssignale verstärken, sodass ein Maximalwert für eine erste Leistungskennlinie der phasengesteuerten Gruppenantenne erreicht wird, wenn eine Impedanz an dem Antennenanschluss dem ersten Abtastwinkel entspricht, und sodass jeder der ersten Vielzahl von Verstärkern hinsichtlich Rauschen durch das Impedanzanpassungsnetz an die Impedanz an dem Antennenanschluss angeglichen wird, die dem ersten Abtastwinkel entspricht, und an die Impedanz an dem Antennenanschluss angeglichen bleibt, die dem ersten Scanwinkel entspricht, wann immer Signale unter Verwendung der Vielzahl von Antennenelementen bei einem beliebigen Abtastwinkel innerhalb des definierten Bereichs von Abtastwinkeln empfangen werden; und
Konfigurieren eines zweiten Satzes von Verstärkern, die jeweils mit einem Antennenanschluss eines der Vielzahl von Antennenelementen gekoppelt sind und die Sendesignale verstärken, sodass ein Maximalwert für eine zweite Leistungskennlinie der phasengesteuerten Gruppenantenne erreicht wird, wenn die Impedanz an dem Antennenanschluss dem zweiten Abtastwinkel entspricht.

11. Verfahren nach Anspruch 10, wobei ein Auswählen eines Abtastwinkels innerhalb eines definierten Bereichs von Abtastwinkeln für die phasengesteuerte Gruppenantenne ein Auswählen des Abtastwinkels umfasst, um einen Extremwert für eine Funktion einer Leistungskennzahl der phasengesteuerten Gruppenantenne über alle Abtastwinkel innerhalb einer Teilmenge des definierten Bereichs bereitzustellen.

12. Verfahren nach Anspruch 11, wobei die erste Leistungskennzahl das Verstärkung/Rauschen-Temperaturverhältnis für die phasengesteuerte Gruppenantenne ist.

13. Verfahren nach einem der Ansprüche 11 bis 12, wobei ein Auswählen des Abtastwinkels, um einen Extremwert für eine Funktion einer Leistungskennzahl über alle Abtastwinkel innerhalb einer Teilmenge des definierten Bereichs bereitzustellen, ein Auswählen des Abtastwinkels umfasst, um eine Gesamtsumme der Leistungskennzahl über alle Abtastwinkel innerhalb der Teilmenge des definierten Bereichs zu maximieren.

14. Verfahren nach einem der Ansprüche 11 bis 13, wobei ein Auswählen des Abtastwinkels, um einen Extremwert für eine Funktion einer Leistungskennzahl über alle Abtastwinkel innerhalb einer Teilmenge des definierten Bereichs bereitzustellen, ein Auswählen des Abtastwinkels umfasst, um einen Minimalwert für die Leistungskennzahl über alle Abtastwinkel innerhalb der Teilmenge des definierten Bereichs zu maximieren.

15. Verfahren nach einem der Ansprüche 11 bis 14, wobei die Teilmenge des definierten Bereichs eine echte Teilmenge des definierten Bereichs ist.

## Revendications

1. Antenne réseau à commande de phase (100 ; 200 ; 300 ; 400) comprenant :
un réseau d'éléments d'antenne (102 ; 152 ; 210 ; 304 ; 410) ayant un faisceau avec une direction de visée ;
une pluralité de déphaseurs (104) réactifs à des commandes pour ajuster les phases d'une pluralité de signaux communiqués avec le réseau d'éléments d'antenne ;
un contrôleur (106 ; 206 ; 309 ; 416) pour fournir les commandes à la pluralité de déphaseurs, dans laquelle les commandes fournies sont utilisées par la pluralité de déphaseurs pour orienter le faisceau dans une plage d'angles de balayage par rapport à la direction de visée ;
une première pluralité d'amplificateurs (108 ; 154 ; 208 ; 310 à 316 ; 420 à 426) chacun configuré pour amplifier un signal de la pluralité de signaux reçus au niveau d'un élément d'antenne associé, dans laquelle chacun de la première pluralité d'amplificateurs est couplé à un port d'antenne du réseau d'éléments d'antenne, via un réseau d'adaptation d'impédance (160), et a une première caractéristique de performance qui dépend de l'impédance de port d'antenne au niveau du port d'antenne, dans laquelle l'impédance d'antenne varie avec un angle de balayage du faisceau dans la plage d'angles de balayage, dans lequel un maximum de la première caractéristique de performance est atteint à une valeur de l'impédance de port d'antenne qui correspond à un premier angle de balayage particulier dans la plage d'angles de balayage qui diffère de la direction de visée, et dans laquelle chacun de la première pluralité d'amplificateurs est adapté en bruit à la valeur de l'impédance de port d'antenne qui correspond au premier angle de balayage particulier, par le réseau d'adaptation d'impédance, et reste adapté en bruit à la valeur de l'impédance de port d'antenne qui correspond au premier angle de balayage particulier chaque fois que des signaux sont reçus en utilisant le réseau d'éléments d'antenne à un angle de balayage quelconque dans la plage d'angles de balayage ; et
une deuxième pluralité d'amplificateurs (314 à 316 ; 424 à 426), chacun configuré pour amplifier un signal parmi la pluralité de signaux pour une transmission au niveau d'un élément d'antenne associé de sorte qu'une valeur maximale pour une deuxième métrique de performance de l'antenne réseau à commande de phase soit atteinte lorsque l'impédance de port d'antenne correspond à un deuxième angle de balayage particulier qui est différent de la direction de visée et du premier angle de balayage particulier.

2. Antenne réseau à commande de phase selon la revendication 1, dans laquelle le premier angle de balayage particulier dans la plage d'angles de balayage est sélectionné pour maximiser une métrique de performance de l'antenne réseau à commande de phase.

3. Antenne réseau à commande de phase selon la revendication 2, dans laquelle la métrique de performance comprend un rapport de gain sur température de bruit pour l'antenne réseau à commande de phase.

4. Antenne réseau à commande de phase selon la revendication 3, dans laquelle la deuxième métrique de performance comprend l'une d'une puissance rayonnée effective pour l'antenne réseau à commande de phase et d'une puissance rayonnée isotrope effective pour l'antenne réseau à commande de phase.

5. Antenne réseau à commande de phase selon la revendication 4, dans laquelle la deuxième pluralité d'amplificateurs sont chacun configurés pour amplifier un signal de la pluralité de signaux pour une transmission au niveau d'un élément d'antenne associé, la métrique de performance comprenant l'une d'une puissance rayonnée effective pour l'antenne réseau à commande de phase et d'une puissance rayonnée isotrope effective pour l'antenne réseau à commande de phase.

6. Antenne réseau à commande de phase selon la revendication 2, dans laquelle l'angle de balayage particulier est sélectionné de sorte qu'une valeur minimale pour la métrique de performance sur tous les angles de balayage dans la plage d'angles de balayage soit maximisée.

7. Antenne réseau à commande de phase selon la revendication 2, dans laquelle l'angle de balayage particulier est sélectionné de sorte qu'une somme totale de la métrique de performance sur tous les angles de balayage dans la plage d'angles de balayage soit maximisée.

8. Antenne réseau à commande de phase selon la revendication 2, dans laquelle la plage d'angles de balayage définit un angle de balayage maximum, et l'angle de balayage particulier est sélectionné pour être à mi-chemin entre la direction de visée et l'angle de balayage maximum.

9. Antenne réseau à commande de phase selon la revendication 2, l'angle de balayage particulier est sélectionné pour maximiser une fonction de la métrique de performance sur tous les angles de balayage dans un sous-ensemble approprié de la plage d'angles de balayage, dans laquelle, facultativement, le sous-ensemble approprié de la plage d'angles de balayage n'inclut pas la direction de visée.

10. Procédé de mise en œuvre d'une antenne réseau à commande de phase (100 ; 200 ; 300 ; 400) ayant une direction de visée, le procédé comprenant :
la sélection d'un angle de balayage dans une plage définie d'angles de balayage pour l'antenne réseau à commande de phase de sorte que l'angle de balayage sélectionné soit différent d'un angle de balayage associé à la direction de visée, une impédance de port d'antenne associée à chacun d'une pluralité d'éléments d'antenne (102 ; 152 ; 210 ; 304 ; 410) comprenant l'antenne réseau à commande de phase variant avec l'angle de balayage de l'antenne réseau à commande de phase, dans lequel la sélection d'un angle de balayage dans la plage définie d'angles de balayage pour l'antenne réseau à commande de phase comprend la sélection d'un premier angle de balayage qui est différent de l'angle de balayage associé à la direction de visée et d'un deuxième angle de balayage qui est différent de chacun de l'angle de balayage associé à la direction de visée et du premier angle de balayage ;
la configuration d'une première pluralité d'amplificateurs (108 ; 154 ; 208 ; 310 à 316 ; 420 à 426), chacun couplé à un port d'antenne de l'un de la pluralité d'éléments d'antenne via un réseau d'adaptation d'impédance (160), qui amplifient les signaux de réception de sorte qu'une valeur maximale pour une première caractéristique de performance de l'antenne réseau à commande de phase soit atteinte lorsqu'une impédance au niveau du port d'antenne correspond au premier angle de balayage, et de sorte que chacun de la première pluralité d'amplificateurs soit adapté en bruit à l'impédance au niveau du port d'antenne qui correspond au premier angle de balayage, par le réseau d'adaptation d'impédance, et reste adapté en bruit à l'impédance au niveau du port d'antenne qui correspond au premier angle de balayage chaque fois que des signaux sont reçus en utilisant la pluralité d'éléments d'antenne à un angle de balayage quelconque dans la plage d'angles de balayage définie ; et
la configuration d'un deuxième ensemble d'amplificateurs, chacun couplé à un port d'antenne de l'un de la pluralité d'éléments d'antenne, qui amplifient des signaux de transmission de telle sorte qu'une valeur maximale pour une deuxième caractéristique de performance de l'antenne réseau à commande de phase soit atteinte lorsque l'impédance au niveau du port d'antenne correspond au deuxième angle de balayage.

11. Procédé selon la revendication 10, dans lequel la sélection d'un angle de balayage dans une plage définie d'angles de balayage pour l'antenne réseau à commande de phase comprend la sélection de l'angle de balayage pour fournir un extrema pour une fonction d'une métrique de performance pour l'antenne réseau à commande de phase sur tous les angles de balayage dans un sous-ensemble de la plage définie.

12. Procédé selon la revendication 11, dans lequel la première métrique de performance est un rapport de gain sur température de bruit pour l'antenne réseau à commande de phase.

13. Procédé selon l'une quelconque des revendications 11 à 12, dans lequel la sélection de l'angle de balayage pour fournir l'extrema pour la fonction de la métrique de performance sur tous les angles de balayage dans le sous-ensemble de la plage définie comprend la sélection de l'angle de balayage pour maximiser une somme totale de la métrique de performance sur tous les angles de balayage dans le sous-ensemble de la plage définie.

14. Procédé selon l'une quelconque des revendications 11 à 13, dans lequel la sélection de l'angle de balayage pour fournir l'extrema pour la fonction de la métrique de performance sur tous les angles de balayage dans le sous-ensemble de la plage définie comprend la sélection de l'angle de balayage pour maximiser une valeur minimale pour la métrique de performance sur tous les angles de balayage dans le sous-ensemble de la plage définie.

15. Procédé selon l'une quelconque des revendications 11 à 14, dans lequel le sous-ensemble de la plage définie est un sous-ensemble approprié de la plage définie.
